(19) Europäisches Patentamt / European Patent Office / Office européen des brevets

(11) **EP 4 145 395 A1**

(12) **EUROPEAN PATENT APPLICATION**

(43) Date of publication:
08.03.2023 Bulletin 2023/10

(21) Application number: 22158985.6

(22) Date of filing: 25.02.2022

(51) International Patent Classification (IPC):
*G06T 11/60* (2006.01)

(52) Cooperative Patent Classification (CPC):
**G06T 11/60**

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**
Designated Extension States:
**BA ME**
Designated Validation States:
**KH MA MD TN**

(30) Priority: **07.09.2021 EP 21195276**

(71) Applicant: **grow.photos GmbH
12047 Berlin (DE)**

(72) Inventor: **Lilienblum, Axel
12047 Berlin (DE)**

(74) Representative: **Schulz Junghans
Patentanwälte PartGmbB
Großbeerenstraße 71
10963 Berlin (DE)**

(54) **METHOD FOR ARRANGING DIGITAL IMAGES ON A DIGITAL PAGE**

(57) The invention relates to a method, in particular a computer-implemented method, for arranging digital images on a page, the method comprising the steps of:
- Receiving a plurality of digital images each with an associated aspect ratio relating a width of the digital image to a height of the digital image,
- Acquiring a plurality of page layout types, with one or more rows and/or one or more columns, wherein each page layout type assigns the received digital images to the at least one row and/or the at least one column of the corresponding page layout type,
- For each page layout type, determining from the aspect ratios of the digital images assigned to the page layout type a width and a height of a print area of the page, particularly such that the print area is greatest within predefined margins of the page,
- For each page layout type, determining a set of parameters for each digital image, wherein the set of parameters comprises an information on a width, a height, an area, the aspect ratio and a position of each digital image in the page layout type,
wherein the set of parameters is determined such, that under the constraint of a fixed aspect ratio of the image, the digital images assigned to the same row have the same height and/or wherein the digital images assigned to the same column have the same width, wherein the height and the width of the digital images are determined further such that the page layout type with the digital images fits to the width and the height of the print area of the page,
- Selecting one page layout type of the page layout types for display,
- Displaying the page with the one selected layout type on the page comprising the digital images arranged on the page according to the determined set of parameters for the one selected layout type.

EP 4 145 395 A1

**Description**

Specification

The invention relates to a method, a computer program as well as a device for arranging digital images on a page.

In the art there are layout photo applications that allow for arranging digital images, e.g. photos on a digital page for subsequent printing. These applications come for example in form of mobile phone apps on which a user may arrange his/her photos and send the arranged photos for printing.

However, in order to fit the photos on the page, resizing of the images is necessary. Ideally the aspect ratio, i.e. the ratio between width and height, of the image should not be changed in order to avoid distortion. On the other hand, digital images come in all kind of aspect ratios, such that arranging a plurality of images on a page in an orderly and eye-pleasing fashion is difficult.

Some photo apps, provide means to crop the images in order to fit them into a predefined image array, in which the photos have a predefined position and size on the page and must have specific aspect ratio.

This however, does not allow a user to arrange the images in a flexible way.

An object of the present invention is to provide such a method that allows for identifying suitable layout types that - for any combination of image aspect ratios of a plurality of images that are to be arranged on the page - provide for a solution that renders the image aspect ratios constant while generating an orderly and eye-pleasing result.

The object is achieved by the method having the features of claim 1.

Advantageous embodiments are described in the dependent claims.

According to a first aspect of the invention, a method, in particular a computer-implemented method, is provided for arranging digital images on a page, the method comprising the steps of:

- Receiving a plurality of digital images each with an associated aspect ratio relating a width of the digital image to a height of the digital image,
- Acquiring a plurality of page layout types, with one or more rows and/or one or more columns, wherein each page layout type assigns the received digital images to the at least one row and/or the at least one column of the corresponding page layout type,
- For each page layout type, determining from the aspect ratios of the digital images assigned to the page layout type a width and a height of a print area of the page, particularly such that the print area is greatest within predefined margins of the page,
- For each page layout type, determining a set of parameters for each digital image, wherein the set of parameters comprises an information on a width, a height, an area, the aspect ratio and a position of each digital image in the page layout type,

wherein the set of parameters is determined such, that under the constraint of a fixed aspect ratio of the image, the digital images assigned to the same row have the same height and/or wherein the digital images assigned to the same column have the same width, wherein the height and the width of the digital images are determined further such that the page layout type with the digital images fits to the width and the height of the print area of the page,

- Selecting one page layout type of the page layout types for display,
- Displaying the page with the one selected layout type on the page comprising the digital images arranged on the page and particularly in the print area according to the determined set of parameters for the one selected layout type.

The step of receiving images particularly refers to receiving e.g. from a memory device having stored on it the digital images the digital images on a computerized device or system.

A computerized device or system in the context of the current specification comprises a processor and electronic circuits that allow the computerized device to execute the method steps of claim 1. For this, the computerized device or system may comprise a display. Further, the computerized device or system may be a computer, such as a mobile device, a mobile phone, a table computer, a camera, a server.

According to another embodiment of the invention, the images comprised in the plurality of images is chosen by a user and caused by a user input, the images are received by the method.

It is noted that the number of images that is received by the method is particularly not a predefined or fixed number but can vary. Further, each image has an aspect ratio associated to it that corresponds to an intended appearance of the image when displayed. The aspect ratio may be derived from the number of pixels along the height and width of the image.

The term "digital image" particularly refers to a data structure for processing with a computerized device, wherein a digital image comprises image data representative of a displayable or printable image having a width and a height.

In the context of the current specification the terms "digital image" and "image" are used synonymously and exchangeably.

The step of acquiring a plurality of page layout types, particularly relates to receiving or loading the page layout types from a data base, e.g. a server, a memory storage device or a cloud solution. The term "acquiring" particularly refers to the method receiving or loading the page layout types into a memory accessible by a computer program executing the method.

The term page layout type particularly refers to a geometrical template for arranging the images. Particularly, the page layout type is a generic template that independently of image aspect ratios allows for arranging the images along at least one row and/or one column.

According to another embodiment of the invention, the page layout type depends on the number of images.

The images are arranged long the at least one row and/or column, wherein a row extends perpendicular to a column.

According to another embodiment of the invention, in case the page layout type comprises more than one row or more than one column, the images in the rows and/or columns do no cross or extend beyond the row or column they are assigned to.

According to another embodiment of the invention, each row forms a rectangular portion that extends along a width of the page, wherein each column forms a particularly rectangular portion that extends along a height of the page. images comprised by a row or a column do not extend into the portion of another row or column. Particularly, the images are completely comprised by the row and/or the column they are assigned to.

According to another embodiment of the invention, each page layout type covers a rectangular area on the page, wherein the area is subdivided by the at least one row por column.

The page layout type assigns the images to the at least one row and/or column and further to a relative position with regard to the other images. That is, the order of the images in the at least one row or column is provided by the page layout type.

However, the page layout types particularly do not provide a fixed positions (but only an order) on the page for each image, but the positions of the images in the rows and columns need to be determined based on the aspect ratios of the images according to the invention.

The term "print area" particularly refers to an area of the page that comprises the images. The print area may particularly not extend in some margins of the page. Said margins may be defined in terms of a predefined minimum margin of the page and automatically according to the invention.

According to another embodiment of the invention, the print area is enclosed by an imaginary frame or circumference surrounding the images in the page layout type.

According to another embodiment of the invention, a position of the print area on the page is determined such that the print area is centered on the page.

During the step of determining the width and height of the print area it is checked that the print area would not extend beyond the margins of the page. Therefore, particularly, in a first step it is assumed that the width of the print area corresponds to a width of the page minus page margins and according to the page layout type and the aspect ratios of the images, the height of the print area is then calculated. If the height extends beyond the margins, the height is set to fit in the page margins and the width of the print area is calculated, which will then fit for sure in the page margins. Obviously, it is possible to interchange the order of width and height determination.

The invention has recognized the fact that by providing page layout types and the aspect ratios of images it is possible to determine all sizes and positions of the images in any given page layout type such that an orderly and visually appealing impression is achieved, without the need to adjust the aspect ratios of the images, to crop the images or to leave free big portions of the page in order to fit the images.

According to the invention, the aspect ratios of the digital images with the determined set of parameters automatically determine the print area to cover the greatest area within predefined margins of the page for each layout type in which the images may be arranged in.

According to another embodiment of the invention, the method further comprises the step of filtering page layout types from the plurality of page layout types, wherein the filtered page layout types consist of the page layout types for which all of the digital images with the determined set of parameters have an area greater than or equal to a threshold value, particularly wherein the threshold value is predefined such that each image covers an area of at least 2% of the page, particularly such that each image covers an area of at least 5% of the page, more particularly such that each image covers an area of 6.6% of the page, particularly wherein the one page layout type selected for display is selected only from the filtered layout types.

The filtering step allows for selecting only layout types that in combination with the images arranged therein, provide a minimum size of images in the page, such that that an impression of a too small image or unrecognizable image content is prevented.

According to another embodiment of the invention, each digital image has an associated index indicative for a suggested order in the page layout type.

According to another embodiment of the invention, each page layout type comprises an associated image array that assigns the images to the at least one row and/or the at least one column of the page layout type, wherein the image array assigns a relative position to each image with respect to the other images of the plurality of images in the layout type, wherein the relative position is indicative for the relative position of the image in the row and/or the column with respect to the other images, particularly wherein each relative position is configured to assign each image an order and/or a number in the row and/or column with respect to the other images of the plurality of images, particularly wherein the image array assigns the images according to their associated index to the relative position, particularly wherein the relative positions are provided by the image array.

According to another embodiment of the invention, the print area is determined by means of a print area equation relating the height of the print area to the width of the print area, wherein the print area equation relates the width and the height of the print area in dependency of the aspect ratios of the digital images and their assigned rows and/or columns in which the digital images are arranged in the layout type.

According to another embodiment of the invention, for each page layout type, and particularly in dependency of the image array associated to the page layout type, the set of parameters for each digital image is determined from an image size equation relating the width and the height of each digital image to the width and/or the height of the print area, particularly under the constraint of a fixed aspect ratio of each digital image, particularly wherein the image size equation for each image is obtained by solving a set of linear equations relating the width, the height, the position of each image with the width and/or the height of the print aera.

According to another embodiment of the invention, for each page layout type, and particularly in dependency of the image array associated to the page layout type, the set of parameters for each image is determined from an image position equation relating the position, particularly a position along a row (x-)direction and a position along a column (y-)direction, to the width and the height of each image as well as to the width and/or the height of the print area, particularly under the constraint of a fixed aspect ratio of each image, particularly wherein the image position equation is obtained by solving for each image a set of linear equations relating the width, the height, and the position of each image with the width and/or the height of the print aera.

According to another embodiment of the invention, the height and the width of the print area is determined also in dependency of image captions, such as text, associated to the images or the page, wherein the image captions are arranged within the print area.

According to another embodiment of the invention, each layout type having more than one row or more than one column comprises at least one straight gap portion extending over the complete layout type between the rows and/or the columns, wherein the height and the width of the print area is determined in dependency of the gap portions, and particularly wherein the image size equation as well as the image position equation depend on the at least one gap portion.

According to another embodiment of the invention, the index associated to each digital image is generated automatically from a date of recording or generation of the digital image, particularly, wherein the index is either ascending or descending with the date of recording or generation of the digital image.

According to another embodiment of the invention, the index associated to each digital image is provided or adjusted by an instant or a previous user input, such that the order of the images in the page layout types is adjusted.

According to another embodiment of the invention, for each page layout type, particularly for each filtered page layout type, a sum of all areas of the digital images with the determined set of parameters is determined, wherein the page layout types, particularly the filtered layout types are indexed with a page layout type index according to a descending order of their associated sum of areas of images and their determined set of parameters for the page layout type, wherein the page layout type, particularly the filtered page layout type having associated the greatest sum of areas of digital images, particularly the page layout type, particularly filtered layout type having the highest page layout type index, is selected for display.

According to another embodiment of the invention, particularly upon user input, the layout type selected for display or the layout type currently displayed is replaced by the layout type having a different page layout type index, and thus particularly digital images with a different set of determined parameters, particularly wherein the displayed layout type is replaced by the layout type having the next lower page layout type index and for example in case the layout type having the lowest page layout type is displayed, the layout type is replaced with the layout type and particularly its associated determined images having the highest page layout type, particularly such that repeated user inputs causes the method to serially display all page layout types or all filtered page layouts.

According to another embodiment of the invention, in the step of filtering the page layout types, if only one page layout type or no page layout type is comprised by the filtered layout types, particularly because the images with the determined set of parameters have smaller areas than the threshold value, the threshold value is reduced until at least two page layout types are comprised by the filtered page layouts for which all of the digital images with the determined set of parameters comprised by the page layout type have an area greater than or equal to the reduced threshold value, particularly wherein the threshold value is adjusted to be equal to an image area of the images with determined set of parameters, such that at least two layout types comprise images having areas that are all greater than or equal to the threshold value.

According to another embodiment of the invention, the method is executed for at least a first, particularly a left page, and a second page, particularly a right page, wherein the first page and the second page are displayed simultaneously, particularly laterally next to each other, particularly on a double-page, wherein on the first page the one selected layout type from the filtered layout types for the images of the first page is displayed and on the second page the one selected layout type from the filtered layout types for the images of the second page is displayed.

According to another embodiment of the invention, particularly before displaying the page layout types on the first and the second page, for the one layout type selected for display on the first page and the one layout type selected for display on the second page, a difference between the height of the print area of the first page and the height of the print area of the second page is determined, wherein if the absolute value of the difference is smaller than a predefined height threshold value, then the height of the print area of the page that has the greater height of the first and the second print area, is reduced while keeping the aspect ratio of the print area constant, such that the heights of the first and the second print area are equal on the first and the second page, particularly wherein the set of parameters of the page with the reduced height of the print area is adjusted accordingly, particularly wherein the predefined height threshold value is in the range of 10% and 50% of a height of the page, particularly wherein the predefined height threshold value is in the range of 12% and 15% of a height of the page, more particularly wherein predefined height threshold value is 13.4% of a height of the page.

According to another embodiment of the invention, a caption, such as text, for the digital image is associated to the digital image, particularly by means of a user input, wherein if the caption is put in for an image neighboring a lowest margin of the print area, particularly of the digital page, when calculating the height and width of the print area and subsequently calculating the set of parameters, an additional space with the height of the size of the caption is included at the lower side of the print area.

According to another embodiment of the invention, a plurality of pages is generated by distributing the received digital images on a plurality of digital pages, and executing the method according to any of the preceding claims for each page, wherein each page comprises at least one image, particularly wherein at least one page comprises at least two images.

According to another embodiment of the invention, the digital images are distributed over the digital pages by means of the index associated to the images, wherein the index associated to each digital image is generated automatically from a date of recording or a date of generation of the digital image, particularly wherein the index is either ascending or descending with the date of recording or generation of the image, particularly wherein a number of images is distributed evenly over the pages, particularly wherein a page number is determined for each image by $pn(i) = \left\lceil i * \frac{\#pages}{\#images} \right\rceil$, wherein $i$ is the index associated to the image, wherein the index counts from 1 to a $\#images$ corresponding to the number of images that are to be distributed over the pages, wherein $\#pages$ corresponds to the number of pages over which the images are to be distributed, wherein $\lceil \rceil$ corresponds to the ceiling function and $pn$ is the page number on which the $ith$ image is arranged on.

According to another embodiment of the invention, the index associated to each image is provided or adjusted by an instant user input or a previous user input, such that the distribution of the images on the pages is adjusted.

According to another embodiment of the invention, each page layout type is configured to host a fixed number of images.

According to another embodiment of the invention, the acquired page layout types are configured to host the number of images comprised in the received plurality of images.

According to another embodiment of the invention, each image array is configured to arrange a fixed number of images in the print area, wherein the image arrays for the acquired page layout types are configured to host the number of images comprised in the received plurality of images.

According to another embodiment of the invention, the plurality of images comprises between 2 and 10, particularly between 2 and 5 images.

According to another embodiment of the invention, the number of page layout types depends on the number of received images, particularly wherein in case

- the plurality of images consists of two images, two page layout types are acquired,
- the plurality of images consists of three images, at least six, particularly eight page layout types are acquired,
- the plurality of images consists of four images, at least 14, particularly 18 page layout types are acquired,
- the plurality of images consists of five images, at least 30, particularly 36 page layout types are acquired.

According to another embodiment of the invention, the number of page layout types depends on the number of received images, wherein the acquired page layout types in dependency of the number of images assign the images to the at least one row and/or column, as follows, wherein the identifier "R" indicates that the page layout type is a row-based page layout type, in which the images are arranged along a number of rows, wherein the identifier "C" indicates that the page layout type is a row-based page layout type, in which the images are arranged along a number of columns, wherein the number of rows or columns is given by the number of digits of a subsequent identifier, wherein the value of each digit of the subsequent identifier is indicative of the number of images in a row or column of the page layout type, particularly wherein the image array of each page layout type is given by the subsequent identifier, wherein for:

- two received images, the acquired page layout types comprise R2, C2, i.e. either two images are arranged in a single row (R2) or two images are arranged in a single column (C2),
- three received images, the acquired page layout types comprise R3, R21, R12, C3, C21, C12,
- four received images, the acquired page layout types comprise R4, R211, R121, R112, R22, R31, R13, C4, C211, C121, C112, C22, C31, C13,
- five received images, the acquired page layout types comprise R5, R2111, R1211, R1121, R1112, R221, R212, R122, R311, R131, R113, R32, R23, R41, R14, C5, C2111, C1211, C1121, C1112, C221, C212, C122, C311, C131, C113, C32, C23, C41, C14.

According to another embodiment of the invention, the page with the displayed page layout type is printed such that an album page is created.

According to another embodiment of the invention, the method comprises the steps of:

- Providing the images to the method by a user selecting or recording the images, wherein the images are stored on a memory device or uploaded to the method by means of a data link connection,
- Upon user input related to a displayed page layout type and/or displayed pages with a plurality of displayed page layout types, transmitting information on the page or pages with the displayed page layout types, to a printer,
- Printing the page or the pages with the images arranged according to one of the preceding claims.

According to a second aspect of the invention, the invention relates to a computer program comprising computer program code, that when executed on a computer or a computerized device, executes the method according to any of the preceding claims or instructs devices controllable by the computer program to execute the respective method steps.

According to another embodiment of the invention, the computer program is configured to receive a user input from a computerized device and to process the user input for executing the method steps relating to a user input.

According to a third aspect of the invention, the invention relates to a computerized device or a computer comprising a processing unit and a memory unit, wherein the memory unit has stored on it the computer program according to the invention.

According to fourth aspect of the invention, A method for arranging a plurality of digital images on a plurality of digital pages, the method comprising the steps of:

- Receiving on a computerized device, particularly by means of user selection, a plurality of digital images,
- For each image, displaying an image icon, particularly a thumbnail image, representative for the image on a display of the computerized device,
- For each page on which the images are to be distributed on, displaying a page icon in form of a highlighted area on the background of the display, the page icon being representative of the page on the display,
- Arranging the image icons in page icons by means of overlaying the image icons on the page icons,

wherein, the image icons are movable on the display upon user input in the computerized device, wherein the image icons are movable from one page icon to another page icon, such that the images can be distributed according to a user selection on the pages,

- particularly, wherein the image icons are movable upon user input within the same page icon such that on order in the page is adjusted, particularly wherein the images represented with the image icons are indexed with an index representative for the order in the page.

The method according to the fourth aspect allows an embodiment as a computer-implemented method. Therefore, the method, may be a computer-implemented method. The method can be stored in a computer program comprising computer program code that when executed on the computerized device, executes the method steps that are executable by the computerized device.

Features, embodiment and definitions as well as examples provided in the context of any previous aspects of the invention may be combined with the features of the method according to the fourth aspect and vice versa.

According to another embodiment of the fourth aspect of the invention, the image icons are distributed over the page icons by means of an index associated to the digital images, wherein the index associated to each digital image is generated automatically from a date of recording or a date of generation of the digital image, particularly wherein the index is either ascending or descending with the date of recording or generation of the digital image.

This embodiment allows for facile and automatic handling of the image icons. As the distribution on the page icons is related to the index, the distribution is not random but associated to the generation of the digital image, or the like, which increase usability by a user.

According to another embodiment of the fourth aspect of the invention, a number of images is distributed evenly over the pages, particularly wherein a page number is determined for each image by $pn(i) = \left\lceil i * \frac{\#pages}{\#images} \right\rceil$ , wherein $i$ is the index associated to the image, wherein the index counts from 1 to *#images* corresponding to the number of images that are to be distributed over the pages, wherein *#pages* corresponds to the number of pages over which the images are to be distributed, wherein $\lceil \ \rceil$ corresponds to the ceiling function and *pn* is the page number on which the *ith* image is arranged on, wherein the image icons are distributed accordingly on the page icons.

This embodiment allows arranging of the icons in a regular, ordered and easy to grasp fashion while also limiting the number of images in a surprising and thus appealing but nonetheless regular fashion over the pages.

According to another embodiment of the fourth aspect of the invention, the index associated to each image is provided or adjusted by an instant user input or a previous user input, such that the distribution of the images on the pages is adjusted.

This allows a user to adjust the general position of the images on the page by changing the index.

According to another embodiment of the fourth aspect of the invention, the display is a touch-screen, and the user input is a performed by means of a drag and drop operation on the display.

This mode of operation allows the method to be executed on a touch-screen device that are common and easy to use. The method makes use of this increased user-friendliness.

According to another embodiment of the fourth aspect of the invention, the image icons are all arranged laterally next to each other on the page icon in a single row.

According to another embodiment of the fourth aspect of the invention, the order of the image icons on the page icon reflects the index associated to the images.

According to another embodiment of the fourth aspect of the invention, the page icons are arranged on the display along an imaginary column on top of each other.

According to another embodiment of the fourth aspect of the invention, the position of the page icon in the column is representative for a page number or page order of the pages.

According to another embodiment of the fourth aspect of the invention, the method further comprises any of the steps or the features the method according to the first, second or third aspect.

Particularly, exemplary embodiments are described below in conjunction with the Figures. The Figures are appended to the claims and are accompanied by text explaining individual features of the shown embodiments and aspects of the present invention. Each individual feature shown in the Figures and/or mentioned in said text of the Figures may be incorporated also in an isolated fashion into a claim relating to the device according to the present invention.

In the following in an exemplary fashion, it is demonstrated how the width and height of the print area is determined from the aspect ratios of the received images for some selected page layout types.

The variables in all examples and the figures refer to

tw = width of print area

th = height of print area

aw = width of the first image

ah = height of the first image

ar = aspect ratio of the first image

ax = x-position, i.e lateral position in the print area of the first image

ay = y-position, i.e. vertical position in the print area of the first image

bw = width of the second image

bh = height of the second image

br = aspect ratio of the second image

bx = x-position, i.e lateral position in the print area of the second image

by = y-position, i.e. vertical position in the print area of the second image

cw = width of the third image

ch = height of the third image

cr = aspect ratio of the third image

cx = x-position, i.e lateral position in the print area of the third image

cy = y-position, i.e. vertical position in the print area of the third image

gp = gap width or height depending along which direction the gap space between the images extends.

lu = caption height of the caption of the image being arranged closest to a lower margin of the page, if there is no caption, then lu = 0.

During a first step in all examples, the height th and the width tw of the print area of the page is determined.

Once the width and the height is determined, the height and width of the images is determined as well as their positions on the page.

For sake of generality, it can be assumed that either the width or the height of the print area is 1, wherein the respective other dimension is smaller than 1.

Therefore, for determining the width and the height the print area, it is checked, whether in case the width is set to 1 (and the height is calculated), the height is smaller than or equal to one, and if not, the height is set to 1, and the width is calculated. This way, it is granted that the print area does not extend beyond the page margins.

Example 1:

1.1 Page-Layout-Type, R2

The R2 layout refers to a row-based page layout having one row comprising two received images.

Calculation of the height th of the print area, particularly setting tw = 1 and gp < 1, i.e. a predefined fraction of the print area width tw and lu < 1, i.e. a predefined fraction of the print area height th:

$$th = \frac{(tw - gp)}{(ar + br)} + lu,$$

In case th > 1, the print area height th is set to 1 and tw is calculated instead from:

$$tw = ar * (th - lu) + gp + br * (th - lu)$$

Then, the size and the positions of the images is calculated from

$$aw = (th - lu) * ar \; ; \; ah = th - lu \; ; \; ax = 0 - \frac{tw}{2} \; ; \; ay = \frac{th}{2} \; ;$$

$$bw = ah * br \; ; \; bh = ah; \; bx = ax + aw + gp; \; by = ay.$$

1.2 Page-Layout-Type, C2

The C2 layout refers to a column-based page layout having one column comprising two received images.

Calculation of the height *th* of the print area, particularly setting *tw* = 1 and *gp* < 1, i.e. a predefined fraction of the print area width *tw* and *lu* < 1, i.e. a predefined fraction of the print area height *th:*

$$th = \frac{tw}{ar} + gp + \frac{tw}{br} + lu$$

In case *th* > 1, the print area height *th* is set to 1 and *tw* is calculated instead from:

$$tw = (th - gp - lu) * \frac{(ar * br)}{(ar + br)}$$

Then, the size and the positions of the images is calculated from

$$aw = tw \; ; \; ah = \frac{aw}{ar} \; ; \; ax = 0 - \frac{tw}{2} \; ; \; ay = \frac{th}{2} \; ;$$

$$bw = tw \; ; \; bh = \frac{bw}{br}; \; bx = ax; \; by = ay - ah - gp.$$

1.3 Page-Layout-Type, C21

The C21 layout refers to a column-based page layout having two columns comprising three received images, wherein in one column 2 of the three images are arranged and the remaining image is arranged in the second column.

Calculation of the height *th* of the print area, particularly setting *tw* = 1 and *gp* < 1, i.e. a predefined fraction of the print area width *tw* and *lu* < 1, i.e. a predefined fraction of the print area height *th:*

$$th = lu + \big((tw - gp) * (ar + br) + gp * (ar * br)\big)/(ar * cr + ar * br + br * cr)$$

In case *th* > 1, the print area height *th* is set to 1 and *tw* is calculated instead from:

$$tw = \frac{\big((th - lu) * (ar * cr + br * cr + ar * br) - gp * ar * br\big)}{(ar + br)} + gp$$

Then, the size and the positions of the images is calculated from

$$aw = tw - gp - (th - lu) * cr \; ; \; ah = \frac{aw}{ar} \; ; \; ax = 0 - \frac{tw}{2} \; ; \; ay = \frac{th}{2} \; ;$$

$$bw = aw \; ; \; bh = \frac{bw}{br}; \; bx = ax; \; by = ay - ah - gp;$$

$$cw = tw - gp - aw \; ; \; ch = \frac{cw}{cr}; \; cx = ax + aw + gp; \; cy = ay.$$

In equivalent layouts the first or the second images may be swapped with the third image.

Another page layout type of the plurality of page layout types for three images is for example The R3 or C3 page layout type, in which all three images are arranged in a row or column respectively. Also the page layout C12 (in contrast to C21) provides a page layout for three images, wherein one of the three images are arranged in the first column and the remaining two images are arranged in the second column.

The plurality of page layout types for three images comprises 8 page layout types, namely: R3, R21, R12, C3, C21, C12. In addition, the page layout R21b and C21b are provided, that differ from R21 and C21, in that the single image being arranged in the row or column is exchanged by another of the three images.

Without loss of generality, in the following the method is illustrated on the example of the plurality of three images being provided. In case a different number of images is received, the page layout types change accordingly.

The method calculates the print area, the image size and positions for all of the page layout types for three images. Then in a subsequent step, for each page layout type, the area of the images with the determined set of parameters, i.e. width, height, position, is calculated, e.g. by multiplying the width with the height of the image.

Filtering is done by filtering out all page layout types in which there is at least one image that comprises an area that is smaller than a predefined threshold value for the area. The threshold value is set according to the expected size of the printed or displayed page, and such that the image content is still perceivable by a viewer of the page. This threshold value depends on the subjective perception of the viewer and may be adjustable, particularly user adjustable. For common displays, the threshold value is in the range of at least 2% of the page area, particularly at least than 5% of the page area.

Subsequently, only page layout types in which all images cover an area that is greater than the minimum area defined by the threshold value, are selected for display.

In case there is only one page layout type remaining after the filtering step, the threshold value is adjusted such that or until at least two page layout types remain.

From the plurality of filtered page layout types, the page layout type is displayed in which the print area and thus the sum of all areas of the images in the layout is greatest. Upon user input, e.g. a touch on the displayed page with the displayed page layout type, the displayed page layout type is exchanged by another page layout type of the filtered plurality of page layout types, such that the user can select a page layout that he/she deems best. By filtering the page layout types prior to displaying, it is ensured that all page layout types provide usable image sizes.

It is noted that the way of calculating the page layout types differs for example from methods known in the art, in that the method does always and independently of the aspect ratios (and number) of the received images provide an appealing arrangement of the images that at the same time cover a sufficiently large area, while none of the images is scaled too small and no distortions due to a change in aspect ratio is introduced in any of the images.

When generating a plurality of pages, e.g. for an photo album, the user may select or provide a plurality of images e.g. from. A photo application.

The selected images will then be distributed by the method essentially equally in number over a predefined number of pages.

Then, for each page the determination of the page layout types, the set of parameters for the images for each layout and the display of the page layout types with the image having the determined set of parameters, is executed. The method according to the invention, may display a plurality, particularly at least two adjacent double pages, to the user with the displayed layout types. The user then, e.g. by tapping (on the display) on one of the pages causes the method to display another filtered page layout type for the page on which the user tapped, such that the user can adjust for all pages the page layout types, until also the composition of all pages seems fit for printing or saving to the user.

This way, the method may be used for generating photo albums with a plurality of pages having thereon orderly and appealing arranged images.

For each image, it is also possible to provide, via user input or automatically, a caption that will be displayed with the image.

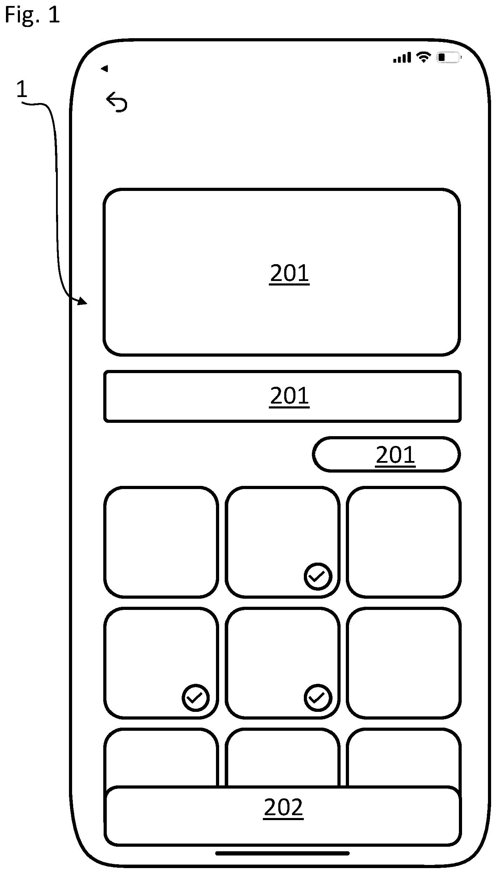

Exemplary embodiments of the method and its aspects when embodied as computer program or a computer-implemented method, are depicted in Figs. 1 to 7.

In reference to Fig. 1 a display from a mobile device with a touch screen is shown. On the display on a first page 1 of an application (in the following referred to as app) that comprises and executes the method according to the invention, the user may be prompted (in form of text boxes 201) to select a plurality of images 300 or photos 300 from some image repository, e.g. from a collection of images taken by the user and stored in the mobile device or on a cloud service the mobile device is connected to.

The user selects the images 300 by tapping on the images, which is indicated by a checkmark on a lower corner of the selected image. The images 300 do not have a preset aspect ratio, but can have any kind of aspect ratio.

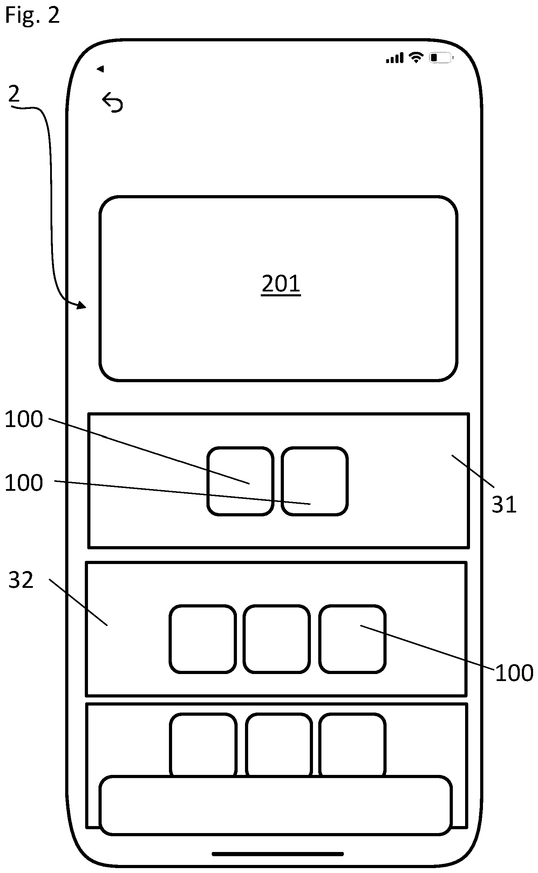

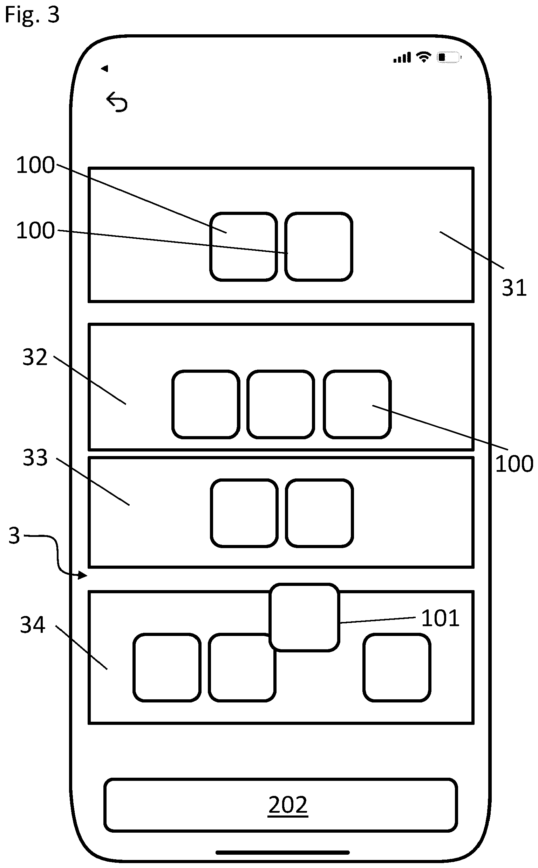

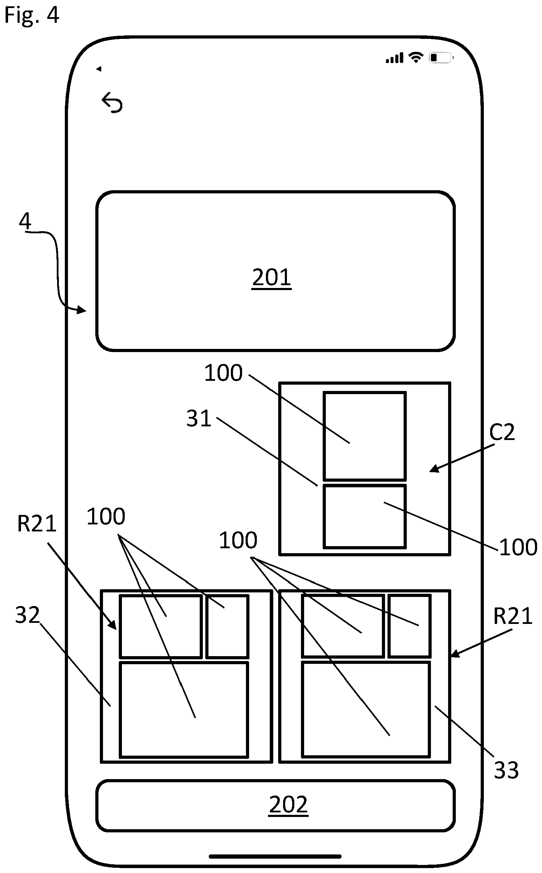

Once the user has selected all photos to be included in a photo album or on photo album pages, the user turns (facilitated by a button 202) to a second page 2 of the app that is depicted in Fig. 2. Here, the method according to the invention, automatically distributes the received images 100 from the first page 1 of the app over a plurality of pages 31, 32. In the example shown, on the first page 31, two images 100 are comprised, wherein on page two 32 and three 33, three images 100 are comprised each. On page four, four images are arranged, (not visible in Fig. 2). In Fig. 3 it is schematically depicted how upon user interaction (drag and drop) an image 101, is moved from the page three 33 to page four 34, such that page three 33 now comprises only two images. This way, the user may distribute the images 100 according to his/her likings. Before he/she turn to a fourth page 4 (cf. Fig. 4) of the app, on which for each page 31, 32, 33, the images are arranged according to the determined set of parameters in the selected page layout type.

As can be seen, on the first page 31, the displayed page layout type is a C2 type layout, where the two images are arranged in a single column. According to the aspect ratios of the images, this page layout type provides the highest fill factor for the print area, as determined by the method.

On page two 32, the selected layout is an R21 layout, wherein on page three 33, the selected layout is also R21 layout, having two rows with two images in the upper row and one image in the lower row. It is noted that the user may have reverted the selection and distribution of images before as laid out in Fig. 3. So that page three 33 still comprises three images.

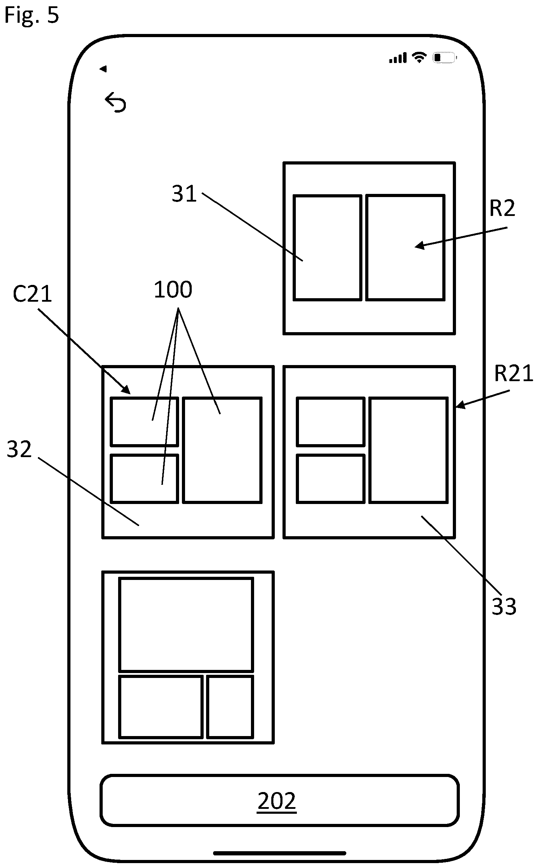

In Fig. 5 a user interaction (e.g. tapping on page two 32) prompted the method to display another of the filtered page layout types for page two 32, such that the page layout type is now a R21 layout, a column-based layout having two columns with two images in the left column and one image in the right column. As can be seen the fill factor of the page is slightly lower.

It is further noted that also the layout type of page one 31, has been changed by user interaction, or automatically by means of a timer, such that page one 31 now is a R2 layout, a row-based layout with a single row comprising two images.

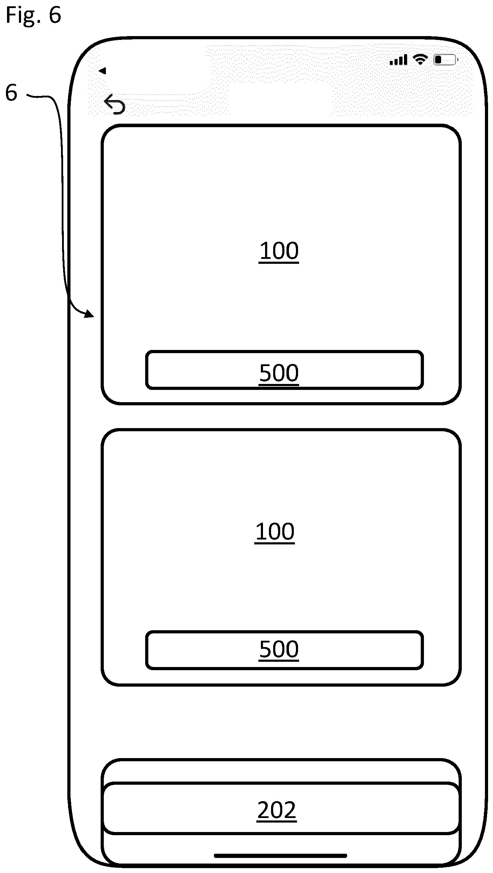

Once the user has selected the page layout types for each page 31, 32, 33, he/she deems best, he/she may proceed and add a caption 500 in a next step 6 of the method to each of the images as shown in Fig. 6.

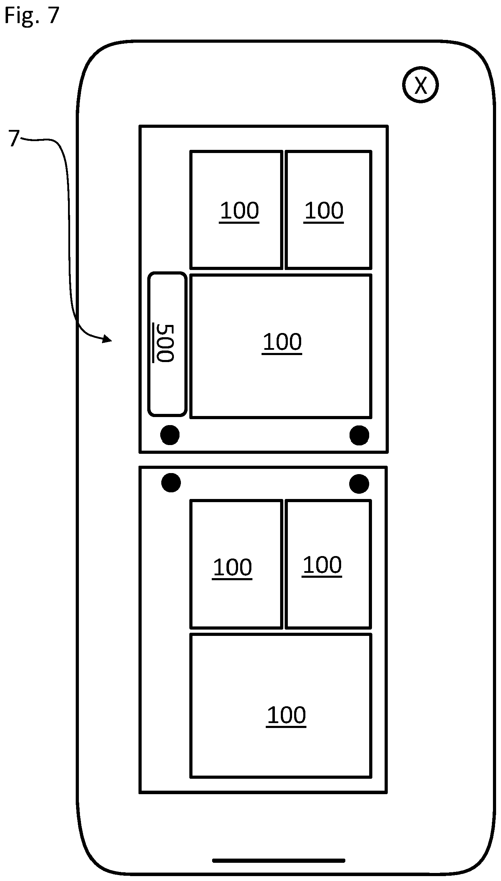

Once, the captions 500 are provided by the user, the app provides a preview 7 of the pages with the images 100 arranged accordingly, cf. Fig. 7. Note that one caption 500 is provided and arranged on the upper page in the print area of said page.

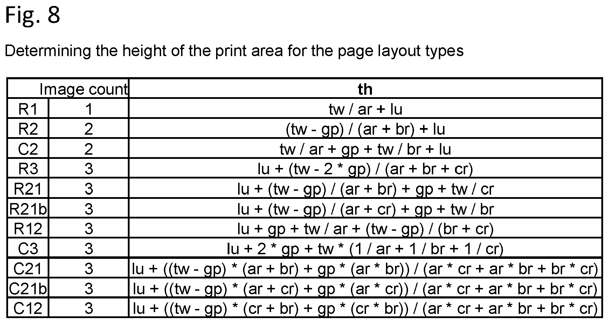

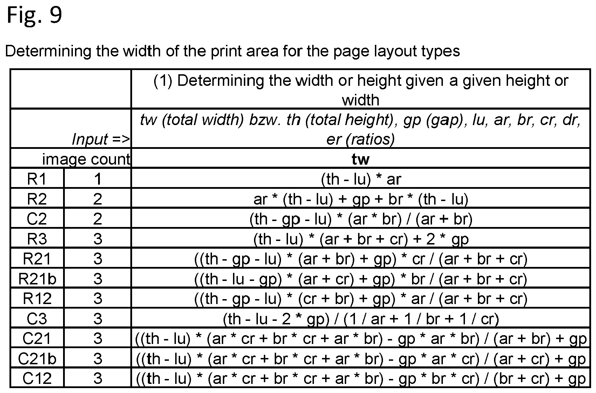

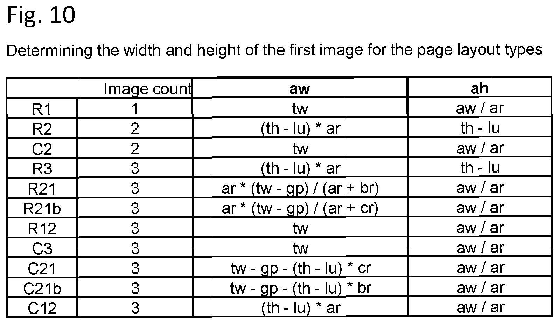

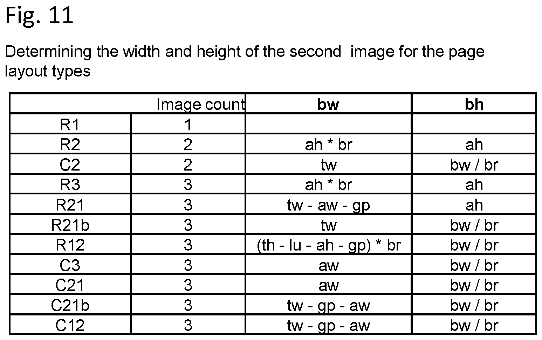

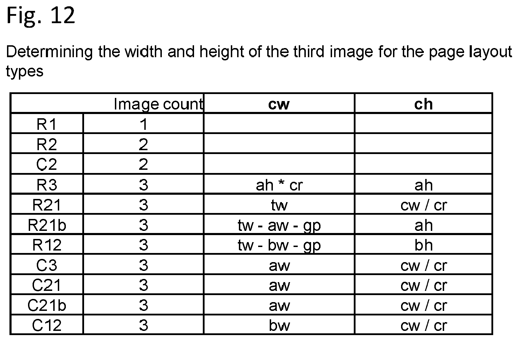

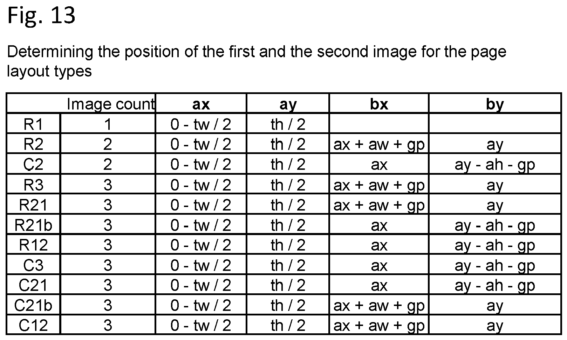

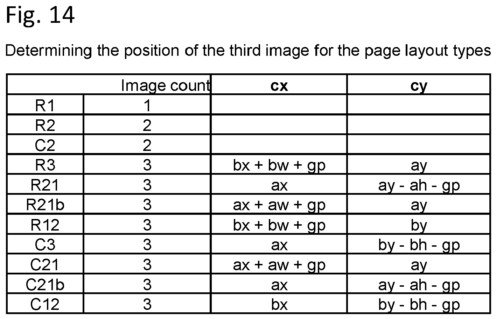

Figs. 8 to 14 relate for any given aspect ratio and for up to three images, the page layout types, with the width and height of the print area, the resulting height and the width of the images as well the position of the images. The extension to more than three images per page is can be calculated correspondingly.

Exemplarily, the tables formulas have been elaborated for the layout C2, R2, as well as for C21 in previous paragraphs.


**Claims**

1. A method, in particular a computer-implemented method, for arranging digital images on a page, the method comprising the steps of:

   - Receiving a plurality of digital images each with an associated aspect ratio relating a width of the digital image to a height of the digital image,
   - Acquiring a plurality of page layout types, with one or more rows and/or one or more columns, wherein each page layout type assigns the received digital images to the at least one row and/or the at least one column of the corresponding page layout type,
   - For each page layout type, determining from the aspect ratios of the digital images assigned to the page layout type a width and a height of a print area of the page, particularly such that the print area is greatest within predefined margins of the page,
   - For each page layout type, determining a set of parameters for each digital image, wherein the set of parameters comprises an information on a width, a height, an area, the aspect ratio and a position of each digital image in the page layout type,

   wherein the set of parameters is determined such, that under the constraint of a fixed aspect ratio of the image, the digital images assigned to the same row have the same height and/or wherein the digital images assigned to the same column have the same width, wherein the height and the width of the digital images are determined further such that the page layout type with the digital images fits to the width and the height of the print area of the page,

   - Selecting one page layout type of the page layout types for display,
   - Displaying the page with the one selected layout type on the page comprising the digital images arranged on the page according to the determined set of parameters for the one selected layout type.

2. The method according to claim 1, wherein the method further comprises the step of filtering page layout types from the plurality of page layout types, wherein the filtered page layout types consist of the page layout types for which all of the digital images with the determined set of parameters have an area greater than or equal to a threshold value, particularly wherein the threshold value is predefined such that each image covers an area of at least 2% of the page.

3. The method according to any of the preceding claims, wherein each digital image has an associated index indicative for a suggested order in the page layout type.

4. The method according to any of the preceding claims, wherein each page layout type comprises an associated image array that assigns the images to the at least one row and/or the at least one column of the page layout type, wherein the image array assigns a relative position to each image with respect to the other images of the plurality of images in the layout type, wherein the relative position is indicative for the relative position of the image in the row and/or the column with respect to the other images.

5. The method according to any of the preceding claims, wherein the print area is determined by means of a print area equation relating the height of the print area to the width of the print area, wherein the print area equation relates the width and the height of the print area in dependency of the aspect ratios of the digital images and their assigned rows and/or columns in which the digital images are arranged in the layout type.

6. The method according to any of the preceding claims, wherein for each page layout type, and particularly in dependency of the image array associated to the page layout type, the set of parameters for each digital image is determined from an image size equation relating the width and the height of each digital image to the width and/or the height of the print area.

7. The method according to any of the preceding claims, wherein for each page layout type, and particularly in dependency of the image array associated to the page layout type, the set of parameters for each image is determined from an image position equation relating the position.

8. The method according to any of the preceding claims, wherein for each page layout type, particularly for each filtered page layout type, a sum of all areas of the digital images is determined, wherein the page layout types are indexed with a page layout type index according to a descending order of their associated sum of areas of images and their determined set of parameters for the page layout type, wherein the page layout type having associated the greatest sum of areas of digital images.

9. The method according to claim 8, wherein the layout type selected for display or the layout type currently displayed is replaced by the layout type having a different page layout type index.

10. The method according to any of the preceding claims, wherein the digital images are distributed over the digital pages by means of the index associated to the images, wherein the index associated to each digital image is generated automatically from a date of recording or a date of generation of the digital image, wherein the index is either ascending or descending with the date of recording or generation of the image, particularly wherein a number of images is distributed evenly over the pages, particularly wherein a page number is determined for each image by $pn(i) = \left\lceil i * \frac{\#pages}{\#images} \right\rceil$, wherein $i$ is the index associated to the image, wherein the index counts from 1 to a *#images* corresponding to the number of images that are to be distributed over the pages, wherein *#pages* corresponds to the number of pages over which the images are to be distributed, wherein ⌈ ⌉ corresponds to the ceiling function and *pn* is the page number on which the *ith* image is arranged on.

11. The method according to any of the preceding claims, wherein the number of page layout types depends on the number of received images, wherein in case

   - the plurality of images consists of two images, two page layout types are acquired,
   - the plurality of images consists of three images, at least six, particularly eight page layout types are acquired,
   - the plurality of images consists of four images, at least 14, particularly 18 page layout types are acquired,
   - the plurality of images consists of five images, at least 30, particularly 36 page layout types are acquired.

12. The method according to any of the preceding claims, wherein the number of page layout types depends on the number of received images, wherein the acquired page layout types in dependency of the number of images assign the images to the at least one row and/or column, as follows, wherein the identifier "R" indicates that the page layout type is a row-based page layout type, in which the images are arranged along a number of rows, wherein the identifier "C" indicates that the page layout type is a row-based page layout type, in which the images are arranged along a number of columns, wherein the number of rows or columns is given by the number of digits of a subsequent identifier, wherein the value of each digit of the subsequent identifier is indicative of the number of images in a row or column of the page layout type, particularly wherein the image array of each page layout type is given by the subsequent identifier, wherein for:

- two received images, the acquired page layout types comprise R2, C2, i.e. either two images are arranged in a single row (R2) or two images are arranged in a single column (C2),
- three received images, the acquired page layout types comprise R3, R21, R12, C3, C21, C12,
- four received images, the acquired page layout types comprise R4, R211, R121, R112, R22, R31, R13, C4, C211, C121, C112, C22, C31, C13,
- five received images, the acquired page layout types comprise R5, R2111, R1211, R1121, R1112, R221, R212, R122, R311, R131, R113, R32, R23, R41, R14, C5, C2111, C1211, C1121, C1112, C221, C212, C122, C311, C131, C113, C32, C23, C41, C14.

13. The method according to any of the preceding claims, wherein the method comprises the steps of:

- Providing the images to the method by a user selecting or recording the images, wherein the images are stored on a memory device or uploaded to the method by means of a data link connection,
- Upon user input related to a displayed page layout type and/or displayed pages with a plurality of displayed page layout types, transmitting information on the page or pages with the displayed page layout types, to a printer,
- Printing the page or the pages with the images arranged according to one of the preceding claims.

14. A computer program comprising computer program code, that when executed on a computer or a computerized device, executes the method according to any of the preceding claims or instructs devices controllable by the computer program to execute the respective method steps.

15. method for arranging a plurality of digital images on a plurality of digital pages, the method comprising the steps of:

- Receiving on a computerized device, particularly by means of user selection, a plurality of digital images,
- For each image, displaying an image icon, particularly a thumbnail image, representative for the image on a display of the computerized device,
- For each page on which the images are to be distributed on, displaying a page icon in form of a highlighted area on the background of the display, the page icon being representative of the page on the display,
- Arranging the image icons in page icons by means of overlaying the image icons on the page icons, **characterized in that**, the image icons are movable on the display upon user input in the computerized device, wherein the image icons are movable from one page icon to another page icon, such that the images can be distributed according to a user selection on the pages.

Fig. 1

Fig. 2

Fig. 3

Fig. 4

Fig. 5

Fig. 6

Fig. 7

# Fig. 8

Determining the height of the print area for the page layout types

| | Image count | th |
|---|---|---|
| R1 | 1 | tw / ar + lu |
| R2 | 2 | (tw - gp) / (ar + br) + lu |
| C2 | 2 | tw / ar + gp + tw / br + lu |
| R3 | 3 | lu + (tw - 2 * gp) / (ar + br + cr) |
| R21 | 3 | lu + (tw - gp) / (ar + br) + gp + tw / cr |
| R21b | 3 | lu + (tw - gp) / (ar + cr) + gp + tw / br |
| R12 | 3 | lu + gp + tw / ar + (tw - gp) / (br + cr) |
| C3 | 3 | lu + 2 * gp + tw * (1 / ar + 1 / br + 1 / cr) |
| C21 | 3 | lu + ((tw - gp) * (ar + br) + gp * (ar * br)) / (ar * cr + ar * br + br * cr) |
| C21b | 3 | lu + ((tw - gp) * (ar + cr) + gp * (ar * cr)) / (ar * cr + ar * br + br * cr) |
| C12 | 3 | lu + ((tw - gp) * (cr + br) + gp * (cr * br)) / (ar * cr + ar * br + br * cr) |

# Fig. 9

Determining the width of the print area for the page layout types

| | | (1) Determining the width or height given a given height or width |
|---|---|---|
| | Input => | tw (total width) bzw. th (total height), gp (gap), lu, ar, br, cr, dr, er (ratios) |
| image count | | tw |
| R1 | 1 | (th - lu) * ar |
| R2 | 2 | ar * (th - lu) + gp + br * (th - lu) |
| C2 | 2 | (th - gp - lu) * (ar * br) / (ar + br) |
| R3 | 3 | (th - lu) * (ar + br + cr) + 2 * gp |
| R21 | 3 | ((th - gp - lu) * (ar + br) + gp) * cr / (ar + br + cr) |
| R21b | 3 | ((th - lu - gp) * (ar + cr) + gp) * br / (ar + br + cr) |
| R12 | 3 | ((th - gp - lu) * (cr + br) + gp) * ar / (ar + br + cr) |
| C3 | 3 | (th - lu - 2 * gp) / (1 / ar + 1 / br + 1 / cr) |
| C21 | 3 | ((th - lu) * (ar * cr + br * cr + ar * br) - gp * ar * br) / (ar + br) + gp |
| C21b | 3 | ((th - lu) * (ar * cr + br * cr + ar * br) - gp * ar * cr) / (ar + cr) + gp |
| C12 | 3 | ((th - lu) * (ar * cr + br * cr + ar * br) - gp * br * cr) / (br + cr) + gp |

# Fig. 10

Determining the width and height of the first image for the page layout types

|  | Image count | **aw** | **ah** |
|---|---|---|---|
| R1 | 1 | tw | aw / ar |
| R2 | 2 | (th - lu) * ar | th - lu |
| C2 | 2 | tw | aw / ar |
| R3 | 3 | (th - lu) * ar | th - lu |
| R21 | 3 | ar * (tw - gp) / (ar + br) | aw / ar |
| R21b | 3 | ar * (tw - gp) / (ar + cr) | aw / ar |
| R12 | 3 | tw | aw / ar |
| C3 | 3 | tw | aw / ar |
| C21 | 3 | tw - gp - (th - lu) * cr | aw / ar |
| C21b | 3 | tw - gp - (th - lu) * br | aw / ar |
| C12 | 3 | (th - lu) * ar | aw / ar |

# Fig. 11

Determining the width and height of the second image for the page
layout types

| | Image count | bw | bh |
|---|---|---|---|
| R1 | 1 | | |
| R2 | 2 | ah * br | ah |
| C2 | 2 | tw | bw / br |
| R3 | 3 | ah * br | ah |
| R21 | 3 | tw - aw - gp | ah |
| R21b | 3 | tw | bw / br |
| R12 | 3 | (th - lu - ah - gp) * br | bw / br |
| C3 | 3 | aw | bw / br |
| C21 | 3 | aw | bw / br |
| C21b | 3 | tw - gp - aw | bw / br |
| C12 | 3 | tw - gp - aw | bw / br |

# Fig. 12

Determining the width and height of the third image for the page layout types

|  | Image count | cw | ch |
|---|---|---|---|
| R1 | 1 |  |  |
| R2 | 2 |  |  |
| C2 | 2 |  |  |
| R3 | 3 | ah * cr | ah |
| R21 | 3 | tw | cw / cr |
| R21b | 3 | tw - aw - gp | ah |
| R12 | 3 | tw - bw - gp | bh |
| C3 | 3 | aw | cw / cr |
| C21 | 3 | aw | cw / cr |
| C21b | 3 | aw | cw / cr |
| C12 | 3 | bw | cw / cr |

# Fig. 13

Determining the position of the first and the second image for the page
layout types

|  | Image count | **ax** | **ay** | **bx** | **by** |
|---|---|---|---|---|---|
| R1 | 1 | 0 - tw / 2 | th / 2 |  |  |
| R2 | 2 | 0 - tw / 2 | th / 2 | ax + aw + gp | ay |
| C2 | 2 | 0 - tw / 2 | th / 2 | ax | ay - ah - gp |
| R3 | 3 | 0 - tw / 2 | th / 2 | ax + aw + gp | ay |
| R21 | 3 | 0 - tw / 2 | th / 2 | ax + aw + gp | ay |
| R21b | 3 | 0 - tw / 2 | th / 2 | ax | ay - ah - gp |
| R12 | 3 | 0 - tw / 2 | th / 2 | ax | ay - ah - gp |
| C3 | 3 | 0 - tw / 2 | th / 2 | ax | ay - ah - gp |
| C21 | 3 | 0 - tw / 2 | th / 2 | ax | ay - ah - gp |
| C21b | 3 | 0 - tw / 2 | th / 2 | ax + aw + gp | ay |
| C12 | 3 | 0 - tw / 2 | th / 2 | ax + aw + gp | ay |

# Fig. 14

Determining the position of the third image for the page layout types

|  | Image count | cx | cy |
|---|---|---|---|
| R1 | 1 |  |  |
| R2 | 2 |  |  |
| C2 | 2 |  |  |
| R3 | 3 | bx + bw + gp | ay |
| R21 | 3 | ax | ay - ah - gp |
| R21b | 3 | ax + aw + gp | ay |
| R12 | 3 | bx + bw + gp | by |
| C3 | 3 | ax | by - bh - gp |
| C21 | 3 | ax + aw + gp | ay |
| C21b | 3 | ax | ay - ah - gp |
| C12 | 3 | bx | by - bh - gp |

Europäisches
Patentamt

European
Patent Office

Office européen
des brevets

## EUROPEAN SEARCH REPORT

Application Number

EP 22 15 8985

### DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | US 2010/269037 A1 (ATKINS CLAYTON BRIAN [US]) 21 October 2010 (2010-10-21) * abstract * * paragraph [0021] - paragraph [0029] * * paragraph [0040] - paragraph [0086]; figures 2A,2B,3-9,11 * | 1-15 | INV. G06T11/60 |
| X | GB 2 526 599 A (IBM [US]) 2 December 2015 (2015-12-02) * abstract * * figures 1A-1C, 2, 5A, 5B * * paragraph [0061] - paragraph [0138] * | 1,14,15 | |
| X | US 2018/150433 A1 (SOWDEN PAUL [US] ET AL) 31 May 2018 (2018-05-31) * abstract * * figure 3 * * paragraph [0006] - paragraph [0031] * * paragraph [0038] - paragraph [0042] * * paragraph [0058] - paragraph [0153] * | 1,14,15 | |
| X | US 9 244 917 B1 (SHARMA JAYESH [US] ET AL) 26 January 2016 (2016-01-26) * abstract * * figure 1 * * column 3, line 16 - column 5, line 57 * * column 9, line 53 - column 15, line 48 * | 1,14,15 | TECHNICAL FIELDS SEARCHED (IPC) G06T |
| A | US 2019/012820 A1 (FURUYA HIROYUKI [JP]) 10 January 2019 (2019-01-10) * the whole document * | 1-15 | |
| A | US 2014/198127 A1 (YING CHARLES H [US]) 17 July 2014 (2014-07-17) * the whole document * | 1-15 | |

-/--

The present search report has been drawn up for all claims

| Place of search | Date of completion of the search | Examiner |
|---|---|---|
| Munich | 8 September 2022 | Leclercq, Philippe |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

Europäisches
Patentamt

European
Patent Office

Office européen
des brevets

# EUROPEAN SEARCH REPORT

**Application Number**

**EP 22 15 8985**

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| A | US 2017/140504 A1 (JEONG HEE-SEOK [KR] ET AL) 18 May 2017 (2017-05-18) * the whole document * | 1-15 | |
| A | US 2007/079236 A1 (SCHRIER EVAN [US] ET AL) 5 April 2007 (2007-04-05) * the whole document * | 1-15 | |
| A | US 2013/155069 A1 (BORDERS KEVIN R [US] ET AL) 20 June 2013 (2013-06-20) * the whole document * | 1-15 | |

TECHNICAL FIELDS
SEARCHED (IPC)

The present search report has been drawn up for all claims

| Place of search | Date of completion of the search | Examiner |
|---|---|---|
| Munich | 8 September 2022 | Leclercq, Philippe |

CATEGORY OF CITED DOCUMENTS

X : particularly relevant if taken alone
Y : particularly relevant if combined with another
document of the same category
A : technological background
O : non-written disclosure
P : intermediate document

T : theory or principle underlying the invention
E : earlier patent document, but published on, or
after the filing date
D : document cited in the application
L : document cited for other reasons

....................................................................

& : member of the same patent family, corresponding
document

EPO FORM 1503 03.82 (P04C01)

## ANNEX TO THE EUROPEAN SEARCH REPORT
## ON EUROPEAN PATENT APPLICATION NO.

EP 22 15 8985

This annex lists the patent family members relating to the patent documents cited in the above-mentioned European search report.
The members are as contained in the European Patent Office EDP file on
The European Patent Office is in no way liable for these particulars which are merely given for the purpose of information.

08-09-2022

| Patent document cited in search report | | | Publication date | Patent family member(s) | | | Publication date |
|---|---|---|---|---|---|---|---|
| US 2010269037 | A1 | | 21-10-2010 | US | 2010269037 | A1 | 21-10-2010 |
| | | | | WO | 2011053602 | A1 | 05-05-2011 |
| GB 2526599 | A | | 02-12-2015 | GB | 2526599 | A | 02-12-2015 |
| | | | | US | 2015346922 | A1 | 03-12-2015 |
| | | | | US | 2020004393 | A1 | 02-01-2020 |
| US 2018150433 | A1 | | 31-05-2018 | US | 2018150433 | A1 | 31-05-2018 |
| | | | | US | 2019164248 | A1 | 30-05-2019 |
| US 9244917 | B1 | | 26-01-2016 | NONE | | | |
| US 2019012820 | A1 | | 10-01-2019 | CN | 109076137 | A | 21-12-2018 |
| | | | | JP | 6559609 | B2 | 14-08-2019 |
| | | | | JP | 2017199961 | A | 02-11-2017 |
| | | | | US | 2019012820 | A1 | 10-01-2019 |
| | | | | WO | 2017187751 | A1 | 02-11-2017 |
| US 2014198127 | A1 | | 17-07-2014 | NONE | | | |
| US 2017140504 | A1 | | 18-05-2017 | EP | 3350673 | A1 | 25-07-2018 |
| | | | | EP | 4057121 | A1 | 14-09-2022 |
| | | | | KR | 20170058816 | A | 29-05-2017 |
| | | | | KR | 20220047962 | A | 19-04-2022 |
| | | | | US | 2017140504 | A1 | 18-05-2017 |
| | | | | US | 2021217133 | A1 | 15-07-2021 |
| | | | | WO | 2017086652 | A1 | 26-05-2017 |
| US 2007079236 | A1 | | 05-04-2007 | AU | 2006299329 | A1 | 12-04-2007 |
| | | | | BR | PI0616940 | A2 | 05-07-2011 |
| | | | | EP | 1941392 | A1 | 09-07-2008 |
| | | | | JP | 2009510650 | A | 12-03-2009 |
| | | | | KR | 20080053930 | A | 16-06-2008 |
| | | | | US | 2007079236 | A1 | 05-04-2007 |
| | | | | WO | 2007041703 | A1 | 12-04-2007 |
| US 2013155069 | A1 | | 20-06-2013 | NONE | | | |

EPO FORM P0459

For more details about this annex : see Official Journal of the European Patent Office, No. 12/82